Europäisches Patentamt

(19) European Patent Office

Office européen des brevets

(11) Numéro de publication: **0 006 485**
**B1**

(12) **FASCICULE DE BREVET EUROPEEN**

(45) Date de publication du fascicule du brevet: **27.07.83**

(51) Int. Cl.³: **G 06 F 9/36,** G 06 F 13/00, G 11 C 8/00

(21) Numéro de dépôt: **79101723.9**

(22) Date de dépôt: **01.06.79**

(54) Dispositif d'adressage de pages dans un système de traitement de données.

(30) Priorité: **23.06.78 US 918221**

(43) Date de publication de la demande:
**09.01.80 Bulletin 80/1**

(45) Mention de la délivrance du brevet:
**27.07.83 Bulletin 83/30**

(84) Etats contractants désignés:
**DE FR GB**

(56) Documents cités:
DE - A - 2 523 686
DE - A - 2 605 617
FR - A - 2 337 373
US - A - 3 976 978

Harold Lorin, "Parallelism in hardware and software", 1972, pp 249 à 258, 443 à 461, 54 à 57, 61 à 68, 82 à 95

"The Bell System Technical Journal", vol. 43, Sept. 1964, pp. 1866 à 1869, 2151, à 2162

(73) Titulaire: **International Business Machines Corporation**
**Old Orchard Road**
**Armonk, N.Y. 10504 (US)**

(72) Inventeur: **Dixon, Jerry Duane**
**801 Enfield Street**
**Boca Raton Florida 33431 (US)**
Inventeur: **Leininger, Joel Calvin**
**601 NW 7TH Street**
**Boca Raton Florida 33432 (US)**

(74) Mandataire: **Colas, Alain**
**COMPAGNIE IBM FRANCE Département de Propriété Industrielle**
**F-06610 La Gaude (FR)**

(56) Documents cités
Richard E. Matick, "Computer Storage Systems and Technology", 1977, pp. 547, 615 à 619

Courier Press, Leamington Spa, England.

## Dispositif d'adressage de pages dans un système de traitement de données

Description

Domaine Technique de l'Invention

L'invention concerne un dispositif d'adressage de pages dans un système de traitement de données dans lequel le contenu de la mémoire est réparti en blocs ou groupes de mots de données et/ou d'instructions appelés pages.

Dans cette mémoire, les instructions et des données de programme sont mises en place dans la même page ou dans des pages différentes de mémoire, indépendamment les unes des autres, et une communication est assurée entre des programmes ou des segments de programme, dans différentes pages, à l'intérieur d'un système de traitement de données, La présente invention concerne plus particulièrement un tel dispositif utilisé dans une unité ou système de traitement de données utilisant des champs d'adresses insuffisants pour accéder à toute la mémoire que l'on désire utiliser (un exemple de ce type d'unité, qui concerne une unité de petites dimensions, est présenté et décrit aux pages 3270 à 3273 du "Technical Disclosure Bulletin", Vol. 19, No. 9, publié en février 1977 par IBM).

Etat de la Technique et son Appréciation

Les dispositifs d'adressage de pages sont bien connus dans l'art antérieur et sont souvent incorporés dans des processeurs où le nombre maximum de bits dans des champs d'adresses du processeur est insuffisant pour adresser directement toute la mémoire qui est requise pour une application particulière.

La brochure IBM intitulée "Technical Disclosure Bulletin", Vol. 19, No. 9, publiée en Février 1977 décrit, pages 3266 et 3267, un microprocesseur utilisant un mode d'adressage par pages pour accroître la capacité de la mémoire. Durant la première partie, dite d'instruction, d'un cycle-machine, un bloc de mémoire est sélectionné au moyen de deux bits d'ordre supérieur de l'adresse de mémoire, les autres bits d'adresse permettant de définir un emplacement de mémoire dans le block sélectionné. Durant la partie dite d'exécution du cycle-machine, quand des données sont à adresser en mémoire, un bloc de mémoire supplémentaire contenant des données est sélectionné.

Instructions et données sont donc adressées dans des blocs de mémoire différents. Cependant, ce système ne comporte pas de dispositif de branchement ni de dispositif fonctionnant en mode d'extraction et d'exécution d'instructions en chevauchement.

Par ailleurs, l'ouvrage de Harold Lorin intitulé "Parallelism in Hardware and Software" — 1972, pages 54 à 57 et 61 à 68 décrit des systèmes de traitement de données comportant une unité d'instruction (I) et une unité d'exécution (E) pouvant travailler en parallèle et réalisant donc un chevauchement des opérations d'extraction et d'exécution d'instructions.

Dans ce livre de Harold Lorin, p. 449 à 451, est aussi décrit un dispositif d'allocation de mémoire faisant usage d'un registre d'état de programme contenant une adresse de base pour les instructions (BI) et une adresse de base pour les données (BD) permettant d'adresser en mémoire un segment d'instructions et un segment de données. Les deux adresses peuvent être modifiées au cours de l'exécution d'un programme et permettent l'adressage indépendant des instructions et des données.

Ces systèmes ne comportent pas de dispositifs d'adressage de pages permettant, en mode de fonctionnement en chevauchement, quand une instruction en cours d'exécution désigne une nouvelle adresse de page d'instruction, d'adresser, au cours du cycle-machine suivant, l'instruction suivante à exécuter dans la même page que celle contenant l'instruction en cours d'exécution, la nouvelle page désignée n'étant donc utilisée qu'ultérieurement.

Il est d'autre part connu dans les dispositifs de l'art antérieur, d'assurer l'inter-action entre programmes par un registre que préserve, pendant un temps limité, une indication de l'adresse de l'instruction dans un premier programme d'où la commande a été transférée à un autre programme. Cette instruction est, d'une manière classique, une instruction de branchement (conditionnel ou inconditionnel). S'il est nécessaire de renvoyer la commande au premier programme, le contenu de ce registre est préservé pour son utilisation ultérieure au moment du retour au premier programme. La mise en réserve du contenu de ce registre demande de la place en mémoire puisqu'elle demande l'introduction, dans le programme, d'une instruction de sauvegarde et un temps supplémentaire pour l'exécution de cette instruction tandis qu'aucun autre travail utile n'est accompli.

Il est également connu, dans les systèmes antérieurs, d'utiliser une instruction spéciale dite de branchement et de liaison. Une instruction de ce type est, par exemple, décrite dans la brochure IBM intitulée "IBM System/370 Principles of Operations", page 123, paragraphe intitulé "Branch and Link" (BAL), GA 22—7000—4, 5th edition, August 1976.

D'une façon générale une instruction de branchement et de liaison est mise en oeuvre par le système qui, en réponse à l'instruction, provoque un branchement à une adresse d'instruction particulière spécifiée par l'instruction, dite adresse de branchement, et emmagasine automatiquement dans un registre de liaison une indication de l'adresse d'instruction (ou de l'instruction qui la suit) d'où la commande a été transférée. L'exécution d'une autre instruction, dite instruction de retour, provoque le retour à la commande à l'instruction, à l'adresse indiquée par le registre de liaison. Ainsi, un programmeur peut très facilement provoquer par exemple la sortie d'un programme principal à un sous-programme, puis le retour au programme principal, à la fin de l'exécution du sous-programme, en utilisant deux instructions simples sans être impliqué lui-même dans l'emmagasinage du contenu d'aucun registre particulier.

Exposé de l'invention

Dans les systèmes fonctionnant en mode d'extraction et d'exécution d'instructions en chevauchement, la formation de l'adresse de l'instruction suivante est réalisée au cours de la première partie du cycle du processeur. Quand un changement de page est commandé, les' adresses suivantes se trouvent donc dans la nouvelle page. Ceci entraîne un manque de souplesse évident.

Un autre problème apparaît pour les instructions de branchement et de liaison qui conditionnent le registre de liaison mais qui détruisent les anciennes informations d'adresses de pages.

La présente invention, telle qu'elle est caractérisée dans les revendications, a pour but de résoudre ces problèmes.

Elle consiste en un nouveau dispositif d'adressage de pages permettant un fonctionnement efficace et souple d'un système de traitement de données. Un premier registre I d'adressage de pages d'instructions est prévu pour emmagasiner le numéro ou l'adresse de la page dans laquelle l'instruction suivante du programme à exécuter est emmagasinée, et un deuxième registre D d'adressage de pages de données emmagasinant le numéro ou l'adresse de la page dans laquelle se trouve la donnée sélectionnée suivante pour ce programme. Par l'utilisation d'instructions spéciales dites de détermination de page de données et de détermination de page d'instructions, les numéros ou adresses de pages dans les registres D et I peuvent être modifiés selon le désir du programmeur pour obtenir une souplesse maximum dans la localisation des instructions et des données tout en permettant d'accroître les possibilités d'adressage du système.

L'invention donne une grande souplesse d'utilisation et une plus grande efficacité au cours des opérations d'adressage effectuées en particulier au cours des transferts de programmes par branchements ou déroutements.

Pendant les extractions d'instructions, le contenu du registre I est transféré à un circuit de décodage d'adresse de page pour la sélection de la page dans laquelle l'instruction se trouve. En même temps, l'adresse interne ou adresse de déplacement dans la page est transférée à un registre d'adresse de mémoire pour déterminer la position de l'instruction dans la page sélectionnée.

Pendant les opérations de chargement et d'emmagasinage de données, le contenu du registre D est transféré au circuit de décodage d'adresse de page pour sélectionner la page dans laquelle se trouve la donnée et l'adresse interne ou adresse de déplacement dans la page est transférée au registre d'adresse de mémoire pour extraire ou emmagasiner la donnée désirée à la position déterminée dans la page sélectionnée.

Quand une opération de branchement ou déroutement doit être effectuée, le conditionnement du registre I est retardé jusqu'à ce que l'extraction de l'instruction suivante soit exécutée, laquelle extraction utilise l'ancienne valeur d'adresse I. Ceci provoque l'extraction de l'instruction séquentielle suivante après l'instruction de détermination de page d'instructions. Cette instruction suivante est l'une des diverses instructions du type branchement et comprend, dans son champ d'adresse de branchement, l'adresse interne de l'instruction à laquelle le branchement est effectué dans la nouvelle page définie par la nouvelle valeur dans le registre I.

L'instruction de détermination de page de données conditionne d'une manière similaire le registre D ultérieurement au cours du cycle d'exécution, si bien que l'ancienne valeur d'adresse de page peut être retenue dans le registre de liaison si une instruction de branchement et de liaison suit l'instruction de détermination de page de données.

Un registre de retard est interposé entre les registres D et I et le registre de liaison. Pendant chaque exécution d'instruction, le contenu des registres D et I est transféré dans le registre de retard. A l'apparition d'une instruction de branchement et de liaison, le contenu du registre de retard contiendra l'ancienne valeur des registres D et I. A la suite de cela, les anciennes valeurs d'adresses de pages sont disponibles pour l'emmagasinage dans le registre de liaison chaque fois qu'une nouvelle valeur d'adresse de page a été déterminée (détermination I ou détermination D) au cours du cycle d'instruction précédant immédiatement une instruction de branchement et de liaison.

Avantages apportés par l'invention

L'utilisation de registres d'adresses de pages d'instructions et de données séparés permet d'accéder à une mémoire de plus grande capacité que celle définie par les champs d'adresses prévus dans les instructions du système.

Elle permet en outre d'obtenir un dispositif d'adressage qui soit à la fois d'une grande souplesse et d'une grande efficacité.

Dans un système de traitement de données et plus particulièrement dans la partie d'un système qui est utilisée comme unité de commande pour, par exemple, plusieurs dispositifs d'entrée/sortie, il peut être nécessaire que le système exécute des programmes de commande séparés d'une manière pratiquement simultanée, bien qu'ils puissent se dérouler à des vitesses asynchrones. Afin de pouvoir assurer ces exécutions, on doit avoir la possibilité d'effectuer des opérations de transfert de commande entre les deux programmes.

Le dispositif d'adressage selon l'invention permet de réaliser ces opérations d'une manière efficace et souple pendant l'exécution d'instructions de branchement et de liaison et d'instructions de retour.

Les améliorations apportées par la presente invention sont particulièrement utiles dans un microprocesseur spécifiquement adapté pour la commande de dispositifs d'entrée/sortie.

La présente invention est incorporée dans une unité de commande dans laquelle les fonctions d'extraction et d'exécution d'instructions sont en chevauchement. Pendant l'exécution d'une instruction, l'instruction suivante est extraite de la mémoire. L'invention permet de réaliser de telles opérations, en particulier lorsque des instructions de branchement et de liaison sont à exécuter, en assurant l'emmagasinage des valeurs d'adresses de pages correctes.

L'invention est exposée ci-après plus en détail à l'aide des dessins qui représentent seulement un mode de réalisation.

Brève description des dessins

La figure 1 est une représentation schématique d'une unité de commande micro-programmée incorporant le dispositif de la présente invention, et

La figure 2 est un diagramme chronologique illustrant le fonctionnement du dispositif de la présente invention.

Description d'un mode de réalisation préféré de l'invention

Le dispositif de la présente invention est de préférence mis en oeuvre sous la forme d'une partie d'une petite unité de commande à programme emmagasiné, commandant une large gamme de dispositifs d'entrée/sortie pour des processeurs plus importants. La description suivante sera en grande partie limitée aux parties de l'unité de commande directement associées au dispositif de la présente invention et qui sont essentielles à son fonctionnement. Ces parties ainsi que d'autres parties d'une unité de commande sont en général bien connues de l'homme de l'art et une description détaillée de celles-ci ne sera donc pas nécessaire.

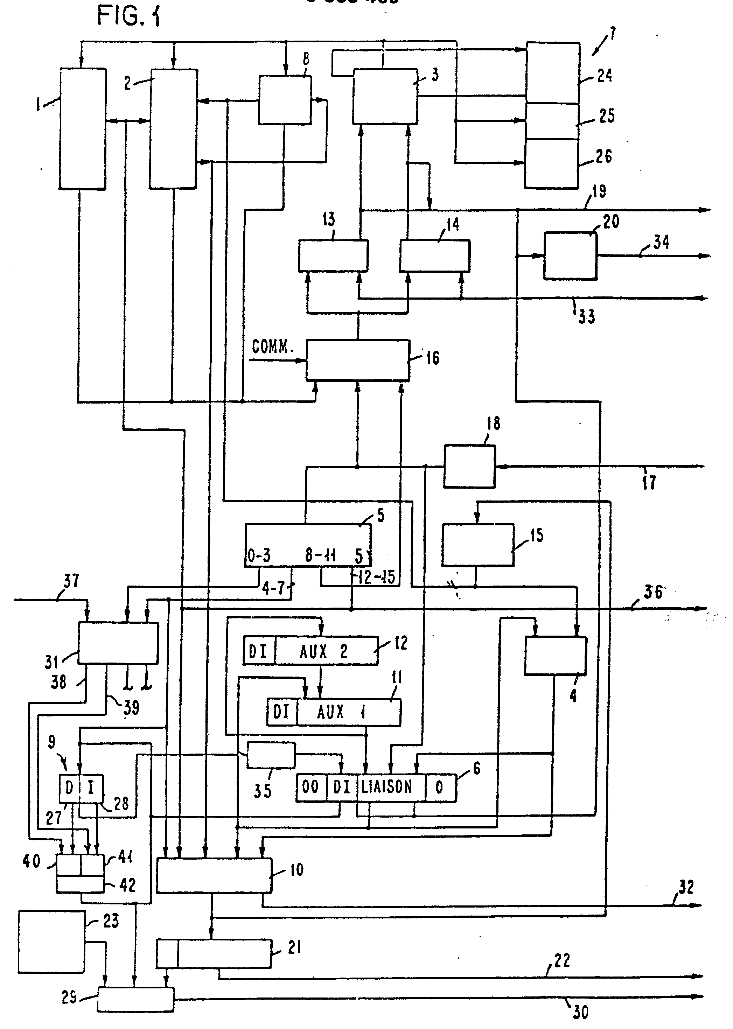

La figure 1 représente l'écoulement des données et instructions dans l'unité de commande à programme emmagasiné décrite ici à titre d'exemple. Les multiplets de données (8 bits) reçus par l'unité de commande entrent dans les deux premiers registres d'un ensemble ou d'une pile de registres de programme 1. Les quatre bits d'ordre supérieur des données entrent dans le premier registre tandis que les quatre bits d'ordre inférieur entre dans le deuxième registre. Les données sortent de l'unité de commande par l'intermédiaire de ces deux registres de la pile de registres de programme. Les données issues de n'importe quelle paire de registres de l'ensemble ou pile de registres de programme 1 et/ou de l'ensemble ou pile de registres d'adresses de données 2 peuvent être envoyées à l'unité arithmétique et logique 3 et le résultat, à la sortie de cette unité, est placé dans l'une ou l'autre pile 1 ou 2. L'unité 3 peut assurer les fonctions d'ADDITION, de SOUSTRACTION, les fonctions logiques ET, OU et OU EXLUSIF. De plus, les fonctions de DEPLACEMENT, COMPARAISON, TEST et DECALAGE peuvent être exécutées en six modes différents quant à l'origine et la destination des données traitées.

Les données issues d'une mémoire inaltérable ou d'une mémoire de lecture et d'écriture (non représentées) peuvent être placées dans les piles de registres. Dans le cas où une mémoire de lecture et d'écriture est utilisée, les données des piles peuvent être écrites en mémoire.

Les instructions adressées par un registre d'adresse d'instruction 4 sont placées dans un registre d'opération 5. Une adresse de branchement peut être issue d'un champ de donnée immédiate dans l'instruction ou à partir d'un registre d'adresse de données ou d'un registre de liaison 6.

Les bascules d'état 7 sont conditionnées par des instructions utilisant l'unité arithmétique et logique 3. Ces bascules peuvent être utilisées au cours de l'exécution d'instructions de test et de branchement pour modifier la séquence des instructions à exécuter.

La pile 2 de registres d'adresses de données (DAR) contient 16 registres à quatre bits, chaque registre pouvant être chargé avec la représentation binaire d'un nombre décimal de 0 à 15. Les registres DAR 0, 1 et 2 de cette pile sont également utilisés pour l'adressage de mémoire et, au cours des opérations d'emmagasinage, ils contiennent une adresse de mémoire à douze bits. Un dispositif d'adressage de données auxiliaire 8 contient trois registres à quatre bits qui peuvent être chargés chacun avec la représentation binaire d'un nombre décimal de 0 à 15. La commande choisissant l'utilisation des registres DAR de la pile 2 ou du dispositif DAR auxiliaire 8 pour l'adressage de la mémoire au cours des opérations d'emmagasinage est assurée par les instructions de programme qui peuvent sélectionner soit les registres de pile 2, soit le dispositif auxiliaire 8.

La pile 1 comporte seize registres à quatre bits appelés registres de programme (PR) qui peuvent être chargés avec la représentation binaire d'un nombre décimal de 0 à 15. Comme il a déjà été dit, les données issues des dispositifs d'entrée/sortie sont chargées dans les deux premiers registres de programme de cette pile, PRO et PRI. Les données envoyées aux dispositifs d'entrée/sortie sont sorties de ces deux registres.

Le registre d'instruction 5 est un registre à seize bits qui reçoit toutes les instructions de la mémoire. Les bits 0 à 7 d'un mot d'instruction contiennent le code d'opération et les bits 8 à 11 et 12 à 15 contiennent des adresses et/ou des données de masquage.

Le registre d'adresse d'instruction 4 est un registre à douze bits (bits 0 à 11) qui contient l'adresse de l'instruction suivant à exécuter. Pendant le chargement initial du programme, le registre 4 contient l'adresse du multiplet de données (8 bits) du dispositif d'entrée/sortie en cours de chargement dans des adresses consécutives de mémoire en partant de l'adresse 0. Le dernier bit d'ordre inférieur (bit 11) sélectionne le multiplet de niveau haut ou de niveau bas d'un mot, un mot étant formé de deux multiplets de 8 bits chacun.

Pour permettre une capacité d'emmagasinage accrue, on prévoit deux registres d'adressage de pages D et I référencés 9 sur la figure 1. L'utilisation de registres D et I séparés pour les données proprement dites et les instructions permet l'emmagasinage de données de programme dans n'importe quelle page ou groupe de mots de mémoire indépendamment de la position des instructions de programme. Le registre d'adresse d'instruction 4, à 12 bits, et le registre d'adresse de mémoire 10 peuvent adresser 4096 (4K) multiplets, ou 2048 (2K) mots. Il est rappelé que dans l'ensemble de réalisation choisi un mot est formé de deux multiplets de 8 bits, en ne tenant pas compte des bits de parité. Les registres d'adressage de pages 9 comprennent un registre D (27) relatif aux données et un registre I (28) relatif aux instructions qui étendent l'adressage au-delà de 2K mots par incréments ou pages de 2K mots pour des données et des instructions, respectivement, une page comportant 2048 mots ou 4096 multiplets dans l'exemple de réalisation choisi.

Dans cet exemple, on supposera que chaque registre D et I (27) et (28) ne contient qu'une bascule permettant l'utilisation de deux pages de 2K mots. En général, les registres 27 et 28 contiennent chacun autant de bascules que nécessaire en fonction du nombre de pages d'emmagasinage qui sont utilisées.

Lorsque la bascule D (ou I) est conditionnée, les registres 2 ou 4, adressent les 2K mots de mémoire supérieurs (page supérieure). Lorsque la bascule est restaurée, les registres 2 ou 4 adressent les 2K mots inférieurs (page inférieure). Ces bascules sont conditionnées et restaurées par des instructions particulières dites de conditionnement de données de niveau haut (SDH), de conditionnement de données de niveau bas (SDL), de conditionnement d'instructions de niveau haut (SIH) et de conditionnement d'instructions de niveau bas (SIL), respectivement.

Il y a trois registres, le registre de liaison 6 et deux registres auxiliaires 11 et 12 qui offrent la possibilité de transférer la commande de programme à programme ou de programme à sous-programme. Le registre de liaison 6 comporte 15 bits dans la réalisation préférée. Pour des raisons ne concernant pas la présente invention, les deux bits d'ordres supérieurs (les deux premiers bits à gauche du registre) sont des zéros. Les troisième et quatrième bits suivants indiquent le conditionnement des bits d'état de la bascule de données au niveau haut (bit D) et d'instructions au niveau haut (bit I). Du cinquième au quinzième bit, on trouve onze bits d'adresse appelés bits de liaison, le dernier ou 11 ème bit d'adresse du registre 6 (bit d'ordre inférieur) étant toujours un zéro pendant les opérations de liaison étant donné que c'est seulement un adressage d'instructions formées de mots complets qui est utilisé dans cette réalisation. Les deux registres auxiliaires 11 et 12 comportent chacun treize bits: les deux bits de bascules de données D et d'instructions I et onze bits d'adresse (bits d'adresse 0 à 10). Lors d'une instruction dite de branchement et de liaison (BAL), le registre de liaison 6 est chargé avec le contenu du registre 4 (adresse de l'instruction suivant l'instruction BAL) et des bascules D et I (27 et 28). Ceci permettra à une instruction dite de retour (RTN) ultérieure de renvoyer le programme à l'instruction séquentielle suivante dans le programme emmagasiné et de conditionner les bascules D et I dans leur état précédant l'exécution de l'instruction BAL. Dans le cas où une deuxième instruction BAL est exécutée, avant l'exécution d'une instruction RTN, le contenu du registre de liaison 6 est transféré au premier registre auxiliaire 11 et la nouvelle valeur du registre 4 et des bits d'état des bascules D/I sont placés dans le registre de liaison 6. Dans le cas où une troisième instruction BAL est exécutée, le contenu du premier registre auxiliaire passera dans le deuxième registre auxiliaire 12. Le contenu du registre de liaison sera transféré au registre auxiliaire 11 et la nouvelle valeur du registre 4 et l'état des bascules D/I seront placés dans le registre de liaison. (Les registres auxiliaires dans la réalisation préférée ne peuvent pas être adressés ou modifiés de quelque façon que ce soit par programmation).

L'exécution d'une instruction RTN provoquera une séquence inverse de celle provoquée par une instruction BAL. Des instructions RTN successives avant une autre instruction BAL provoqueront le branchement du programme à l'adresse dans le registre de liaison 6 afin de poursuivre l'exécution du programme et également de transférer le contenu du registre auxiliaire 11 au registre de liaison et du registre auxiliaire 12 au registre auxiliaire 11.

L'exécution d'une instruction dite de retour et de liaison (RAL) provoquera l'utilisation du contenu du registre de liaison 6 comme adresse d'instruction suivante (comme dans le cas d'une instruction RTN) et provoquera l'emmagasinage du contenu du registre 6 et des bascules D/I 9 dans le registre de liaison 6. Le transfert du contenu du registre 6 et des bascules D/I au registre de liaison est similaire au transfert effectué lors de l'exécution d'une instruction BAL mais, dans la réalisation préférée, l'exécution de l'instruction RAL n'affecte pas les registres auxiliaires 11 et 12.

Le registre d'adresse de mémoire 10 est un registre à douze bits (bits 0 à 11) qui contient l'adresse de l'instruction ou du mot de données à accéder en mémoire. Si une mémoire étendue (au-delà de 2K mots) est utilisée, l'état de la bascule D (lors des extractions de données) ou de la bascule I (lors des extractions d'instructions) détermine laquelle des moitiés supérieure ou inférieure de la mémoire est adressée (page supérieure ou page inférieure).

L'adresse d'instruction est transférée au registre 10 à partir du registre 4 si l'instruction séquentielle suivante doit être exécutée, ou à partir du registre d'instruction 5 si un branchement est exécuté. Lors d'une instruction RTN ou RAL, le contenu du registre de liaison 6 est transféré au registre 10. L'adresse du multiplet de données de mémoire est transférée au registre 10 à partir du registre 5 ou de la pile de registres 2, trois registres de la pile de DAR 2 étant nécessaires pour fournir une adresse à douze bits.

Les registres 13 et 14 sont des registres à 4 bits. Ils contiennent les bits d'ordre supérieur et inférieur, respectivement, pendant le transfert de données de multiplet à partir des lignes du conducteur d'entrée de données 33 ou vers les lignes du conducteur de sortie de données 19. Le registre 13 et le registre 14 contiendront les données devant être utilisées par l'unité arithmétique et logique 3 pour des opérations arithmétiques et logiques ainsi qu'il sera décrit plus en détail par la suite, les instructions commandant ces opérations comportent, outre un code d'opération, (positions 0—7), un champ X ou des données de masquage (positions 8—11) et un champ Y (positions 12—15). Pendant ces opérations, le contenu du registre indiqué par le champ X de l'instruction ou les données de masquage sera placé dans le registre 13. Le contenu du registre indiqué par le champ Y de l'instruction sera placé dans le registre 14.

Une unité d'incrémentation à douze bits 15 incrémente le contenu du registre 2 ou du registre 4 par l'intermédiaire du registre 10, de +1 ou de +2 comme requis par l'opération en cours d'exécution.

Le dispositif d'assemblage 16 est une matrice qui transfère des données des registres 1, 2, 8, du registre 5 (bits 8 à 11), et du conducteur de données de mémoire 17, aux registres 13 et/ou 14.

L'unité arithmétique et logique 3 reçoit des données des registres 13 et 14 et délivre des données ou des résultats aux registres 1, 2 ou 8. Les données passant au travers de l'unité arithmétique et logique peuvent être additionnées, soustraites ou manipulées logiquement. Les bascules de report 24, de zéro 25 et de non zéro 26 peuvent être conditionnées suivant les résultats de l'opération.

La parité des bits entrant sur les conducteurs de données de mémoire 17 est vérifiée par le contrôleur de parité 18. Les bits de données sortant sur les conducteurs de sortie de données 19 comportent également un bit de parité associé. Le bit de parité sur 34 est généré par le générateur de parité 20 de façon à fournir un nombre de bits impair dans la réalisation préférée.

Une porte électronique 21 à la sortie du registre 10 permet de transférer les bits d'adresse contenus dans ce registre aux lignes du conducteur d'adresse de mémoire 22 pour adresser la mémoire. Lorsque l'unité de commande est en mode test, la porte 21 interdit aux bits issus du registre 10 de passer aux conducteurs d'adresse de mémoire 22.

Il y a trois bascules d'état dans 7 qui peuvent être conditionnées à la suite d'une instruction arithmétique, de chargement ou d'entrée. Ces bascules demeurent conditionnées jusqu'à ce qu'elles soient restaurées par une autre opération (le fait d'être testées ne modifie par leur état). Toutes les bascules sont restaurées en même temps même si l'instruction en cours d'exécution n'a pas la possibilité de conditionner toutes les bascules. (Ceci permet l'utilisation d'une instruction machine unique pour différents tests à différents moments, comme décrit ci-dessous dans le paragraphe traitant des instructions de branchement conditionnel).

La bascule de report 24 présente deux états qui peuvent être vérifiés, l'état report et l'état non report. L'état report est établi lors d'un report sortant de la position de bit 0 pendant une opération du type addition. Il peut également être établi pendant l'exécution des instructions de décalage. La bascule 25 est conditionnée lorsque la donnée 0 est délivrée par l'unité 3. Cette bascule peut être conditionnée en même temps que la bascule 24. En modes "résumé", "entrée" et "chargement", les bascules 24 et 25 peuvent être conditionnées. La bascule 26 est conditionnée lorsqu'une certaine valeur autre que zéro est délivrée par l'unité 3. Cette bascule peut être conditionnée en même temps que la bascule 24. Les bascules d'état sont conditionnées par le passage de données à travers l'unite 3. Lorsqu'une instruction, qui transfère deux sections de mot, à quatre bits, à travers l'unité 3, est exécutée, les bascules d'état ne sont pas restaurées pour la deuxième section à quatre bits. Cela est défini comme le "mode résumé". Le mode "résumé" est également établi pour certaines instructions arithmétiques pour permettre l'exécution et le test de multiples opérations avec une instruction de branchement conditionnel. Quant aux modes "entrée" et "chargement", ils seront définis et expliqués plus loin.

Les bascules D (données) et I (instructions) dans 9 sont utilisées pour sélectionner des adresses de mémoire de niveau bas ou de niveau haut au cours des cycles d'emmagasinage ou d'extraction de données en mémoire et d'extraction d'instructions, respectivement. Ainsi qu'on l'a déjà expliqué, la bascule D 27 et la bascule I 28 sont déconditionnées ou conditionnées indépendamment en programmation par l'utilisation d'instructions dites de conditionnement de données de niveau bas (SDL) ou de conditionnement de données de niveau haut (SDH) pour une utilisation ultérieure pendant les cycles d'emmagasinage et d'extraction de données et des instructions dites de conditionnement d'instructions de niveau bas (SIL) ou de conditionnement d'instructions de niveau haut (SIH) pour les cycles d'extraction d'instruction.

Ces bascules sont également conditionnées ou déconditionnées à la suite de l'exécution d'une instruction RAL ou RTN. Pendant l'exécution de ces instructions, les bascules D et I sont restaurées/conditionnées selon l'état des bits D/I dans le registre de liaison 6. Elles sont conditionnées au niveau haut si le bit d'état est un "1" et au niveau bas si le bit d'état est un "0". Ces bits d'état, lorsqu'ils sont conditionnés, provoquent la sélection, par l'unité de commande, des positions de mémoire entre les adresses de mots 2048 et 4095 dans la mémoire de niveau haut. Lorsque ces bits d'état sont déconditionnés, l'unité de commande n'adresse que la mémoire de niveau bas ou les 2048 premiers mots ou moins. (Si seulement 2K mots ou moins de la mémoire sont disponibles, ces bascules ne doivent pas être utilisées). Si plus de 2K mots de mémoire sont disponibles, ces bascules sont utilisées indépendamment. Par exemple, les extractions de données sont effectuées en mémoire haute ou basse suivant le conditionnement de la bascule D. Les extractions d'instructions sont effectuées en mémoire haute ou basse suivant le conditionnement de la bascule I. Ceci assure une souplesse maximum du dispositif de mise en page.

Au cours du cycle-machine pendant lequel les instructions SDL, SDH, SIL et SIH sont décodées pour exécution et les bascules D et I restaurées/conditionnées, la mémoire est accédée pour extraire l'instruction suivante avec pour base l'état de la bascule I au début du cycle.

Donc, c'est pendant l'exécution de ladite instruction suivante après l'instruction SDL, SDH, SIL ou SIH que l'accès à la mémoire haute ou basse peut être réalisé selon le nouvel état de la bascule D 27 ou de la bascule I 28.

Cependant, les instructions d'emmagasinage ou d'extraction de données en mémoire suivant une instruction SDL ou SDH accéderont à la mémoire haute ou basse selon le nouvel état de la bascule D 27 étant donné qu'il y a deux cycles qui se déroulent.

Les instructions SIL et SIH sont suivies par des instructions du type branchement. Les instructions SIL ou SIH conditionneront la nouvelle valeur de page pour l'instruction de branchement et l'instruction de branchement délivrera l'adresse interné ou adresse de déplacement dans la nouvelle page sélectionnée. L'instruction de branchement et de liaison peut être utilisée à la suite des instructions SDH, SDL, SIH et SIL pour garder la trace de la séquence des pages de mémoire pour les références des données et/ou des instructions dans la mémoire haute ou basse et assurer des branchements aux sous-programmes. Les instructions RTN et RAL permettront le retour aux séries interrompues d'instructions et à l'état précédent des bascules D et I pour les références en mémoire. Pendant l'opération de chargement initial de programme, la bascule D est conditionnée après que 4096 multiplets aient été chargés pour permettre une opération de chargement atteignant 8192 multiplets. La bascule 23 est utilisée pour sélectionner des adresses de mots de mémoire comprises entre 4096 et 8191. Cette bascule est conditionnée et restaurée par les instructions spéciales. Lorsque la bascule 23 est conditionnée, tous les accès en mémoire se feront aux adresses de mots comprises entre 4096 et 8191, l'état des bascules D et I déterminant lesquelles des adresses de niveau bas 4096 à 6143 ou de niveau haut 6144 à 8191, seront sélectionnées. Ces instructions spéciales peuvent être combinées avec les instructions SIL et SIH de façon que des branchements puissent être réalisés depuis et vers n'importe quelle adresse en mémoire après que la sélection de mémoire appropriée ait été faite. Dans la réalisation préférée, la valeur de bit indiquée par 23 n'est pas retenue par le registre de liaison 6.

Dans cet exemple de réalisation de l'invention, la mémoire comporte des blocs ou modules d'emmagasinage de 1024 mots (1K mots), chaque mot étant formé de seize bits de données (deux multiplets) plus deux bits de parité. Un module d'emmagasinage contient donc une demi-page. Les huit lignes de sélection de mémoire 30 permettent la sélection individuelle des modules d'emmagasinage. Les bits 1 à 10 sur les conducteurs d'adresse de mémoire 22 adressent un mot de module entre les positions 0 et 1023 du module adressé. Pour une opération d'écriture en mémoire, la sélection du multiplet dans le mot à deux multiplets est établie par la ligne de multiplet d'écriture en mémoire de niveau haut ou de niveau bas 32 qui est constituée par le bit d'adresse de mémoire 11 délivré par le registre 10.

Le dispositif de décodage d'adresses 29 accepte trois entrées. Une entrée de la bascule 23, une entrée de la bascule 27 ou 28 (suivant que ce sont des données ou des instructions qui sont adressées) et une entrée du bit d'ordre élevé à partir du registre 10 (par la porte 21). Le décodeur 29 convertira l'entrée à trois bits en une sortie de huit bits pour sélectionner l'un des huit modules ou blocs de 1K mots de mémoire en passant l'une des huit lignes de sélection de mémoire 30 au niveau haut.

Dans tout ce qui précède il a été question d'instructions à extraire de la mémoire et à exécuter. Il doit être bien entendu que ce mot instruction doit être pris dans son sens le plus large englobant à la fois les instructions-machine et les micro-instructions d'un microprogramme servant à exécuter les instructions. Dans l'exemple de réalisation choisi le registre d'instruction 10 contient une micro-instruction à 16 bits.

Le dispositif de commande de cycles 31 est un décodeur de micro-instructions. Il décode les micro-instructions transférées dans le registre 5. En réponse à ces micro-instructions et simultanément à des signaux de chronologie et à divers signaux de commande du système sur 37 (tels que par exemple la restauration), il génère des signaux de transfert pour chaque cycle de fonctionnement. Les détails particuliers de la réalisation de l'unité de commande de cycle 31 ne seront par donnés ici en raison du fait que ces dispositifs sont bien connus de l'homme de l'art. De plus, l'homme de l'art reconnaîtra que ce type de dispositif est réellement défini dans une grande mesure par la définition de l'ensemble d'instructions d'un processeur de données. Pour cette raison, les mises en oeuvre particulières de ces unités de commande de cycle varient d'un système à un autre.

Comme indiqué ci-dessus, des micro-instructions sont reçues par le registre 5, depuis la mémoire, par la ligne d'entrée de données de mémoire 17. Dans ce registre, les positions de bits sont référencées 0, 1, ..., 15 de la gauche vers la droite. Les quatre premiers bits dans les positions de bits 0—3 définissent un mode de traitement pour le système et sont toujours transmis à la commande de cycles 31 pour décodage. La réalisation préférée de la présente invention constitue une partie d'un système à onze modes définis par les quatre premiers bits de la micro-instruction de la manière suivante:

| Bits 0—3 | Mode |
|---|---|
| 0000 | Registre de programme à registre de programme (PR à PR) |
| 0001 | Registre d'adresse de données à registre d'adresse de données (DAR à DAR) |
| 0010 | Registre de programme à registre d'adresse de données (PR à DAR) |
| 0011 | Registre d'adresse de données à registre de programme (DAR à PR) |
| 0100 | Masque à registre de programme (MSK à PR) |
| 0101 | Masque à registre d'adresse de données (MSK à DAR) |
| 0110 | Entrée |
| 0111 | Sortie |
| 100x | Chargement |
| 101x | Emmagasinage |
| 11xx | Branchement et mise en page |

(x signifie ''1 ou 0'')

La signification des autres champs (bits 4 à 15) de la micro-instruction dépendra du mode de traitement. La fonction assurée dans chaque mode est décrite ci-dessous. De plus, les micro-instructions, dans chacun des modes, sont indiquées. En ce qui concerne la plus grande partie des micro-instructions suivantes, autres que celles indiquées ci-dessus, elles ne seront pas décrites à moins qu'elles aient quelque signification en ce qui concerne la mise en oeuvre préférée de la présente invention.

Les six premiers modes indiqués ci-dessus (PR à PR, DAR à DAR, PR à DAR, DAR à PR, MSK à PR et MSK à DAR) sont tous utilisés pour des opérations arithmétique et logiques qui utilisent l'unité 3. Dans ces modes, les bits 4 à 7 de la micro-instruction définissent l'opération à exécuter par l'unité 3 sur les deux champs de données qui lui sont transmis. Ce champ d'opération est transmis du registre 5 à l'unité de commande de cycles 31 qui le décode pour générer des signaux de commande pour l'unité 3. Les bits 8 à 11 dans le registre 5 définissent une adresse de champ X pour les modes PR à PR, DAR à DAR, PR à DAR et DAR à PR, et un masque pour les modes MSK à PR et MSK à DAR. Les bits 12 à 15 définissent une adresse de champ Y pour ces six modes.

Mode PR à PR (0000): Le contenu du registre de programme indiqué par le champ X est combiné au contenu du registre PR indiqué par le champ Y de la manière commandée par le code fonction de l'instruction. Les résultats, en cas d'emmagasinage, sont placés dans le registre PR indiqué par le champ Y. N'importe laquelle des bascules d'état 7 peut être conditionnée par les opérations arithmétiques et de décalage. Les instructions logiques peuvent conditionner les bascules 25 ou 26. Les instructions "résumé" ne restaurent pas les bascules dont l'état est combiné avec l'état existant.

Mode DAR à DAR (0001): Dans ce mode, le système fonctionne exactement comme dans le mode PR à PR à l'exception du fait que le champ X et le champ Y se rapportent aux registres d'adresses de données.

Mode PR à DAR (0010): Dans ce mode, le système fonctionne exactement comme dans le mode PR à PR à l'exception du fait que le champ Y concerne un registre d'adresse de données.

Mode DAR à PR (0011): Dans ce mode, le système fonctionne exactement comme dans le mode PR à PR à l'exception du fait que le champ X concerne un registre d'adresse de données.

Mode MSK à PR (0100): Dans ce mode, le système fonctionne exactement comme dans le mode PR à PR à l'exception du fait que les bits 8 à 11 spécifient un masque au lieu d'une adresse.

Mode MSK à DAR (0101): Dans ce mode, le système fonctionne exactement comme dans le mode MSK à PR à l'exception du fait que le champ Y concerne un registre d'adresse de données.

Les seize fonctions assurées par l'unité 3 sont définies par les bits 4 à 7 des instructions, dans les six modes indiqués ci-dessus, de la manière suivante:

| Fonction | Instruction (bits 4—7) |
|---|---|
| ADD | 0000 |
| ADD. AVEC REPORT | 0001 |
| MOUVEMENT | 0010 |
| SOUSTR. AVEC RETENUE | 0011 |
| SOUSTR. | 0100 |
| COMPAR. | 0101 |
| RESUM, SOUSTR. | 0110 |
| RESUM. COMPAR. | 0111 |
| ET | 1000 |
| TEST | 1001 |
| RESUM. ET | 1010 |
| RESUM. TEST | 1011 |
| OU | 1100 |
| DECALAGE DROIT * | 1101 |
| OU EXCLUSIF | 1110 |
| DECALAGE DROIT CIRCULAIRE * | 1111 |

* Ces deux fonctions ne sont assurees dans aucun des modes MSK

Le mode entrée (0110) est utilisé pour transférer et/ou tester les huit bits (un multiplet) de données sur les lignes du conducteur d'entrée de données 33. La donnée est placée sur ces lignes par le dispositif sélectionné dont l'adresse est définie dans le champ opérande de l'instruction par les bits 8 à 15. L'adresse peut être n'importe quelle valeur entre 0 et 255 en valeur décimale ou FF en hexadécimal. Elle est envoyée à partir du registre 5 sur le conducteur d'adresse 36. Il y a deux instructions en mode d'entrée. Ce sont l'instruction d'entrée à partir d'un dispositif (IN) et l'instruction de détection dispositif (SNS). L'instruction IN provoque le transfert, par le système, des données sur 33 (les données ont été placées là par le dispositif sélectionné) et leur emmagasinage dans PRO et PR1. Le registre PRO contient les bits 0—3 et le registre PR1 contient les bits 4 à 7. L'instruction SNS est similaire à l'instruction IN à l'exception du fait que la donnée n'est pas emmagasinée dans un registre quelconque mais testée en ce qui concerne son état zéro ou non zéro. Les instructions IN et SNS restaurant toutes les bascules 7 au début de l'opération. Seules les bascules 25 et 26 peuvent être conditionnées. La deuxième section de mot à quatre bits passe par l'unité 3 en mode résumé et la condition des bascules d'état est déterminée par l'opération OU des résultats des deux sections à quatre bits passant par l'unité 3. Les bascules 25 et 26 peuvent toutes deux être conditionnées à la fin de l'opération.

La mode sortie (0111) est utilisé pour transférer huit bits (un multiplet) de données par les lignes du conducteur de sortie de données 19 au dispositif sélectionné. Comme en mode entrée, le dispositif devant recevoir les données est sélectionné par l'adresse de dispositif se trouvant dans le champ opérande de l'instruction. L'adresse de dispositif dans le champ opérande ne peut pas excéder 255 en valeur décimale ou FF en hexadécimal. Il y a deux instructions en mode de sortie. Ce sont l'instruction de sortie vers dispositif (OUT) et l'instruction d'entrée et de sortie directes (DIO). L'instruction OUT provoque l'envoi d'un multiplet de données à partir des registres PRO et PR1 vers le dispositif. Le registre PRO contient les bits 0 à 3 et le registre PR1 contient les bits 4 à 7. L'instruction DIO est utilisée pour transférer les données par les lignes du conducteur d'entrée de données 33 aux lignes du conducteur de sortie de données 19 (Le dispositif délivrant les données sur les lignes 33 doit avoir la même adresse que le dispositif recevant les données sur les lignes 19 dans ce système). Les instructions OUT et DIO ne modifient pas les bascules d'état.

Mode chargement (1000 à l'exception du mode "chargement adresse absolue" désigné par 1001). En mode chargement, toutes les instructions ont un temps d'exécution de deux cycles. Pendant le deuxième cycle ou cycle de données, un mot de données complet est extrait de la mémoire et placé sur le conducteur d'entrée de données de mémoire 17. Le multiplet de niveau bas ou de niveau haut du mot de données est transféré pour son traitement suivant que l'adresse DAR (bit 11) ou l'adresse d'opérande est paire ou impaire, respectivement. Le multiplet est transféré au registre PR, au registre DAR ou au dispositif d'entrée/sortie. Les deux multiplets du mot de données sont transférés au registre de liaison 6 lors de l'exécution des deux instructions de chargement de registre de liaison (LDL). Il y a dix instructions de chargement différentes:

L'instruction "chargement PR" (LDR) provoque l'extraction par le système d'un multiplet de données de la position de mémoire définie par les trois registres DAR. La donnée est placée dans deux registres PR définis par le champ X et le champ Y. La première moitié du multiplet de données est placée dans le registre défini par le champ X et la deuxième moitié est placée dans le registre défini par le champ Y.

Les trois registres DAR forment l'adresse de multiplet à douze bits en utilisant le contenu du registre DAR 0 pour les bits 0 à 3, du registre DAR 1 pour les bits 4 à 7, et du registre DAR 2 pour les bits 8 à 11. Les registres DAR 0, 1 et 2 doivent être chargés avec l'adresse de mémoire désirée avant l'exécution de l'instruction de chargement. Pour l'instruction LDR, les bits 4 à 7 de la micro-instruction sont 1001.

L'instruction "chargement PR et incrémentation DAR + 1" (LDRP) est similaire à l'instruction LDR mais incrémente les registres DAR 0, 1 et 2 de un. Les bits 4 à 7 de cette micro-instruction sont 1011.

L'instruction "chargement DAR" (LDD) provoque l'extraction par le système d'un multiplet de données de la position de mémoire définie par les trois registres DAR 0, 1 et 2. La donnée est placée dans les deux registres DAR qui sont définis par le champ X et le champ Y. La première moitié du multiplet de donnée est placée dans le registre défini par le champ X et la deuxième moitié est placée dans le registre défini par le champ Y. Les trois registres DAR forment l'adresse à douze bits en utilisant le contenu du registre DAR 0 pour les bits 0 à 3, du registre DAR 1 pour les bits 4 à 7 et du registre DAR 2 pour les bits 8 à 11. Ces registres DAR doivent être chargés avec l'adresse désirée avant que l'instruction de chargement ne soit exécutée. Pour cette micro-instruction, les bits 4 à 7 sont 0100.

L'instruction "chargement DAR et incrémentation DAR + 1" (LDDP) est similaire à l'instruction LDD mais incrémente les registres DAR 0, 1 et 2 de un. Les bits 4 à 7 sont 0110.

L'instruction "chargement mémoire indexé" (LDI) utilise les registres DAR 0 et DAR 1 et la valeur qui est codée dans les bits 12 à 15 de l'instruction pour définir l'adresse de mémoire. L'adresse à douze bits est formée en utilisant le contenu du registre DAR 0 pour les bits d'adresse 0 à 3, le contenu du registre DAR 1 pour les bits d'adresse 4 à 7 et la valeur dans l'instruction pour les bits d'adresse 8 à 11. La donnée qui est chargée passe dans les registres PRO et PR1. Le registre PRO contient les quatre premiers bits et le registre PR1 contient les quatre bits suivants. Cette instruction permettra au programmeur d'adresser jusqu'à seize positions de mémoire sans modifier le contenu des registres DAR 0 et 1. Les bits 4 à 7 de l'instruction sont 1010. Les bits 8 à 11 peuvent être ignorés ou peuvent être requis dans une configuration particulière, par exemple, 0000.

L'instruction "mémoire à dispositif entrée/sortie" (MIO) utilise l'adresse contenue dans les registres DAR 0, 1 et 2 pour définir l'adresse de mémoire des données à envoyer à un dispositif d'entrée/sortie identifié par les bits 8 à 15 de l'instruction. Les trois registres DAR forment l'adresse à douze bits en utilisant le contenu du registre DAR 0 pour les bits d'adresse 0 à 3, le contenu du registre DAR 1 pour les bits d'adresse 4 à 7 et le contenu du registre DAR 2 pour les bits d'adresse 8 à 11. L'adresse désirée doit être chargée dans les registres DAR avant l'exécution de l'instruction MIO. La valeur pour le dispositif à adresser est codée dans le champ d'opérande et doit être comprise entre 0 et 255 en valeur décimale. Les bits 4 à 7 sont 1100.

L'instruction "mémoire à dispositif entrée/sortie et incrémentation DAR + 1" (MIOP) a le même effet que l'instruction MIO mais incrémente les registres DAR 0, 1 et 2 de un. Les bits 4 à 7 sont 1110.

L'instruction "chargement registre de liaison" (LDL) provoquera le chargement par le système du registre de liaison 6 à partir de la position de mémoire définie par l'adresse indiquée par les registres DAR 0, 1 et 2. Les registres DAR 0, 1 et 2 doivent être chargés avant l'utilisation de cette instruction et doivent contenir une adresse paire étant donné que cette opération adresse un mot complet en mémoire. Les bits 4 à 7 du premier multiplet de mémoire et les bits 0 à 6 du deuxième multiplet de mémoire forment l'adresse chargée dans le registre de liaison. Le bit 2 du premier multiplet contient le bit de commande pour la sélection de la mémoire de données de niveau haut ou de niveau bas (conditionnement de la bascule D) et le bit 3 du premier multiplet contient le bit de commande pour la sélection de la mémoire d'instructions de niveau haut ou de niveau bas (conditionnement de la bascule I). Simultanément à l'exécution de l'instruction LDL, le contenu du premier registre auxiliaire 11 est transféré dans le deuxième registre auxiliaire 12 et le contenu du registre de liaison 6 est transféré dans le premier registre auxiliaire comme le ferait l'instruction DAL. Cette instruction peut être utilisée pour initialiser le registre de liaison 6 pour l'instruction RAL. Les bits 4 à 7 sont 0000. Les bits 8 à 15 peuvent être ignorés.

L'instruction "chargement registre de liaison et incrémentation DAR + 2" (LDLP) a le même effet que l'instruction LDL mais incrémente les registres DAR 0, 1 et 2 de deux. Les bits 4 à 7 sont 0010.

Les instructions de chargement, à l'exception des instructions MIO, MIOP, LDL et LDLP, restaurent toutes les bascules d'état 7 au début de chaque opération. Ce sont seulement les bascules 25 et 26 qui peuvent être conditionnées. Le deuxième demi-multiplet passe au travers de l'unité 3 en mode résumé et la condition des bascules d'état est donnée par la fonction OU des deux demi-multiplets traversant l'unité 3. Les bascules 25 et 26 peuvent être toutes deux conditionnées à la fin de l'opération. Les instructions MIO, MIOP, LDL et LDLP ne modifient pas les bascules d'état.

Mode emmagasinage (1010) (à l'exception de l'instruction emmagasinage adresse absolue" qui se présente sous le format 1011). Ces instructions constituent essentiellement l'opposé des instructions "mode chargement". En mode chargement, les transferts se font de la mémoire aux registres. En mode emmagasinage, les transferts se font des registres à la mémoire.

A l'exception des instructions STI et STA, toutes les instructions de mode d'emmagasinage emmagasinent un multiplet de données en mémoire, dont l'adresse est définie par les registres actifs DAR 0, 1 et 2. Ces registres forment l'adresse à douze bits en utilisant le contenu du registre DAR 0 pour les bits d'adresse 0 à 3, du registre DAR 1 pour les bits d'adresse 4 à 7 et du registre DAR 2 pour les bits d'adresse 8 à 11. Le bit 11, lorsqu'il est conditionné, provoquera l'emmagasinage dans le multiplet de niveau haut étant donné que le bit 11 en étant déconditionné provoquera l'emmagasinage dans la moitié de multiplet de niveau bas du mot. Les registres DAR 0, 1 et 2 doivent être chargés avec l'adresse désirée avant l'exécution de l'instruction d'emmagasinage. Une instruction de mode d'emmagasinage sera traitée comme une instruction NO—OP dans le cas d'une mémoire permanente. Les instructions de mode d'emmagasinage ne modifient pas les bascules d'état.

Les huit instructions d'emmagasinage suivantes constituent simplement l'inverse des huit instructions de mode de chargement (les bits 4 à 15 sont les mêmes): emmagasinage PR (STR), emmagasinage PR et incrémentation DAR + 1 (STRP), emmagasinage DAR (STD), emmagasinage DAR et incrémentation DAR + 1 (STDP), données d'entrée/sortie vers mémoire (IOM), données d'entrée/sortie vers mémoire et incrémentation DAR + 1 (IOMP), emmagasinage mémoire indexé (STI) et emmagasinage adresse absolue (STA).

En mode emmagasinage, quatre instructions concernent le registre de liaison. (En mode de chargement, il y en a deux). Ces instructions sont définies ci-dessous:

L'instruction "emmagasinage liaison niveau haut" (SLH) provoque l'emmagasinage par le système des bits d'ordre élevé du registre de liaison 6 dans une position de mémoire dont l'adresse est définie par les trois premiers registres DAR qui doivent être chargés avant l'exécution de cette instruction. Les bits d'état D et I du registre de liaison seront emmagasinés dans les positions de bits de mémoire 2 et 3 et les bits de mémoire 0 et 1 seront établis à zéro. Les positions de bits de mémoire 4 à 7 recevront les bits 0 à 3 du champ d'adresse du registre de liaison. Cette instruction doit emmagasiner les bits d'ordre élevé du registre de liaison dans une adresse de multiplet paire de façon à être disponibles en tant que portion d'ordre élevé d'un mot complet pour les instructions LDL et LDLP.

L'instruction "emmagasinage liaison niveau haut et incrémentation DAR + 1" (SLHP) a le même effet que l'instruction SLH mais incrémente les registres DAR 0, 1 et 2 de un.

L'instruction "emmagasinage liaison niveau bas" (SLL) provoque l'emmagasinage par le système des bits 4 à 10 du champ d'adresse du registre de liaison 6 dans les positions de bits 0 à 6 de la position de mémoire définie par le contenu des registres DAR 0, 1 et 2. Le bit 7 de la position de mémoire sera établi à zéro. L'instruction SLL doit emmagasiner les bits d'ordre inférieur du registre de liaison dans une adresse de multiplet impaire et celui-ci doit être le multiplet suivant le multiplet pair utilisé avec l'instruction SLH. Ceci permet au contenu emmagasiné du registre de liaison 6 d'être disponible pour rechargement par les instructions LDL.

L'instruction "emmagasinage liaison niveau bas et incrémentation DAR + 1" (SLLP) a le même effet que l'instruction SLL mais incrémente les registres DAR 0, 1 et 2 de un.

Mode branchement (11xx): L'unité de commande qui constitue l'environnement de la réalisation préférée de la présente invention peut exécuter six instructions de branchement inconditionnel. Trois utilisent le registre de liaison 6. Toutes les adresses de branchement sont des adresses de mots complets (deux multiplets) et sont définies par les bits 4 à 14. Les adresses doivent être paires en raison du fait que toutes les instructions commencent à des limites de multiplets paires. Le bit 15 fait partie des champs "fonction mode" pour des instructions de branchement. L'instruction située à l'adresse de branchement sera extraite de la mémoire pour exécution. L'adresse de branchement sera incrémentée de 1 et placée dans le registre IAR 4 de façon que le registre IAR contienne l'adresse de l'instruction suivante à exécuter.

L'instruction "branchement et attente" (BAW) provoquera le branchement et l'arrêt par le système de l'horloge de l'unité de commande après l'exécution du branchement. L'unité de commande démarrera lors de la réception d'une impulsion d'horloge de démarrage. Une restauration du système sortira également l'unité de commande d'une condition de branchement et d'attente. Les bits 1 à 3 de cette micro-instruction sont 1100. Les bits 4 à 14 spécifient l'adresse de branchement. Le bit 15 est égal à 0.

L'instruction "branchement" (B) est une instruction de branchement inconditionnel à l'adresse définie par les bits 4 à 14. Les bits 0 à 3 sont 1101. Le bit 15 est égal à 1.

L'instruction "branchement et liaison" (BAL) est un branchement inconditionnel à l'adresse définie par les bits 4 à 14. Elle provoque également le placement de l'adresse de l'instruction séquentielle suivante (après l'instruction BAL) et de l'état des bascules D et I dans le registre de liaison pour utilisation ultérieure par une instruction RTN ou RAL. Les bits 0 à 3 sont 1110. Le bit 15 est égal à 0. Dans le système préféré, jusqu'à trois instructions BAL peuvent être exécutées avant qu'une instruction RTN ne soit délivrée sans perte de l'adresse de retour. L'instruction BAL provoque également le transfert du contenu du registre de liaison au premier registre auxiliaire 11 et le transfert du contenu du registre auxiliaire 11 au deuxième registre auxiliaire 12. Dans le cas où plus de trois instructions BAL sont délivrées, c'est seulement les trois dernières adresses qui seront retenues.

L'instruction "branchement par le registre de liaison ou retour" (RTN) provoque un branchement inconditionnel à l'adresse contenue dans le registre de liaison. Les bascules D et I sont conditionnées au début du cycle de fonctionnement selon les bits d'état D

et I dans le registre de liaison. De plus, le contenu du premier registre auxiliaire 11 est transféré dans le registre de liaison et le contenu du deuxième registre auxiliaire 12 est transféré dans le premier registre auxiliaire 11. L'instruction RTN se présente sous le format 1111 0000 0000 0001.

L'instruction "retour et liaison"(RAL) utilise le registre de liaison 6, les bascules D/I 9 et le registre d'adresse d'instruction 4. Le registre de liaison doit avoir été chargé avant l'exécution de l'instruction RAL (par exemple par une instruction BAL, LDL ou LDLP). Au moment de l'exécution, le contenu du registre de liaison 6 est utilisé pour obtenir l'adresse de l'instruction suivante, puis le contenu du registre 4 et du registre de retard 35 (qui contient la valeur des bascules D et I 9 à partir de l'exécution de l'instruction précédente) sont placés dans le registre de liaison 6. L'instruction RAL ne peut par suivre une instruction SDH, SDL, SIH ou SIL dans la réalisation préférée, c'est-à-dire qu'il s'agira d'une séquence non valable. Cette instruction RAL ne provoque pas de changement dans le contenu des registres auxiliaires 11 et 12. (Les instructions BAL et RTN modifient ces registres). Dans cette réalisation préférée, l'instruction RAL se présente sous le format 1111 0010 0000 0001.

L'instruction "branchement par registre DAR" (BVD) provoque un branchement à l'adresse formée par les trois registres DAR. Le registre DAR 0 délivre les bits d'adresse 0 à 3, le registre DAR 1 délivre les bits d'adresse 4 à 7 et le registre DAR 2 délivre les bits d'adresse 8 à 10 de l'adresse de branchement. Le bit d'ordre inférieur délivré par le registre DAR 2 (bit 11) n'est par utilisé pour accéder à la mémoire. Ceci permet à tous les branchements d'être à une limite de multiplet paire. Le contenu des registres DAR n'est pas modifié par cette instruction. L'instruction BVD se présente sous le format suivant: 1111 1000 0000 0001.

Dix instructions de branchement conditionnel sont également prévues dans le système. Celles-ci sont indiquées ci-dessous en même temps que la configuration des bits 0 à 3 et 15. Les bits 4 à 15 définissent l'adresse de branchement.

**0 006 485**

| Instruction | Bits 0—3 | Bit 15 |
|---|---|---|
| BRANCH. NON REPORT | 1 100 | 1 |
| BRANCH. REPORT | 1101 | 0 |
| BRANCH. NON ZERO | 1110 | 1 |
| BRANCH. ZERO | 1111 | 0 |
| BRANCH. NIVEAU HAUT | 1100 | 1 |
| BRANCH. NIVEAU BAS SUR EGAL. | 1101 | 0 |
| BRANCH. NON EGAL | 1110 | 1 |
| BRANCH. EGAL | 1111 | 0 |
| BRANCH. VRAI | 1110 | 1 |
| BRANCH. FAUX | 1111 | 0 |

La configuration des bits de certaines de ces instructions est identique à celle d'autres instructions. Par exemple, les instructions "branchement non zéro" "branchement non égal" et "branchement vrai" présentent toutes la configuration de bits 1110 ... 1 et constituent ainsi rellement la même instruction. La signification réelle de ces instructions dépendra de leur utilisation dans un programme. Les quatre premières instructions indiquées ci-dessus sont utilisées après une opération arithmétique. Les quatre instructions suivantes sont utilisées après une opération de comparaison. Les deux dernières instructions sont utilisées après une opération de test. Chacune de ces instructions de branchement provoque réellement le test d'une bascule, mais la signification de la condition des diverses bascules est déterminée par l'opération précédente.

Le dispositif de liaison pour la retenue d'adresses (registre de liaison 6) comprend un dispositif pour amorcer la liaison (unité de commande de cycles 31 commandant la réponse du système aux instructions BAL, LDL et LDLP) et un dispositif pour transférer la commande à l'adresse retenue dans le dispositif de liaison et pour l'établissement de la liaison à une nouvelle valeur. L'unité de commande de cycles 31, en réponse à une instruction RAL, provoque le transfert du contenu du registre de liaison 6 au registre 10 et du bit I au décodeur 29 pour extraire l'instruction suivante, le transfert des bits D/I dans le registre de liaison 6 aux bascules D/I 9, l'incrémentation de l'adresse de liaison dans le registre 10 et son emmagasinage dans le registre 4 et le transfert du contenu du registre de retard 35 et du registre 4 au registre de liaison 6.

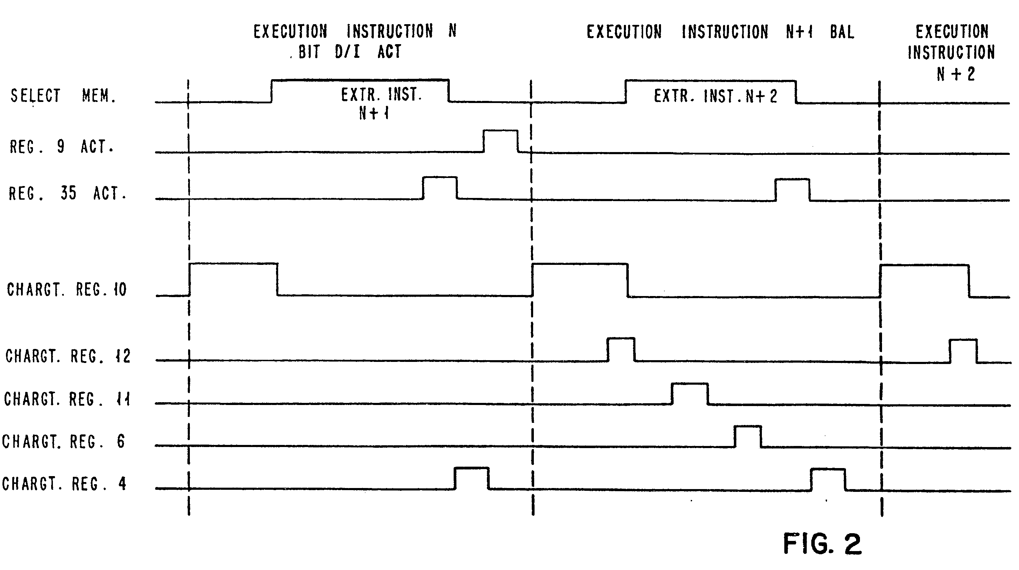

Le registre de retard 35 (qui consiste, par exemple, en une paire de bascules pour un emmagasinage intermédiaire de deux bits dans le cas où il n'y a qu'une seule paire de bascules D et I 9) est utilisé pendant l'échange du contenu du registre de liaison 6 avec le contenu des bascules D/I 9 et du registre 4. Avant la réception d'une entrée qui modifierait les bascules D/I pendant l'exécution des instructions SDH, SDL, SIH, SIL, leur contenu est transféré au registre de retard 35 (voir figure 2). Cependant, pendant l'exécution d'une instruction RAL, l'échange du contenu du registre 6 avec le contenu des bascules D/I et du registre 4 est réalisé de la manière suivante. Les liaisons entre le registre 6 et le registre 10 d'une part et entre le registre 6 et les bascules D/I 9 d'autre part sont excitées tôt dans le cycle (figure 2) afin de transférer le contenu du registre 6 au registre 10 et aux bascules D/I (comme cela est réalisé pour une instruction RTN, à l'exception que, dans ce cas, les registres auxiliaires 11 et 12 ne sont pas affectés). Le bit I dans le registre 6 est également transféré au décodeur 29. Le décodeur 29 et le registre 10 extraient l'instruction "branchée" en utilisant l'adresse issue du registre 6. Les bits d'adresse dans le registre 10 sont mis à jour par l'unité d'incrémentation 15 et emmagasinés dans le registre 4. Cette opération conditionne le dispositif d'adressage du système si bien que l'instruction suivante à extraire de la mémoire sera celle suivant le point de retour précédemment établi. Puis les liaisons allant du registre 4 au registre 6 et du registre de retard 35 (qui contient le contenu précédent des bascules D/I de l'instruction précédente) au registre 6 sont conditionnées pour transférer le contenu du registre 4 et l'ancien contenu des bascules D/I au registre 6 (comme cela est réalisé pour une instruction BAL sauf que dans ce cas les registres auxiliaires 11 et 12 ne sont pas affectés). Cette opération établit dans le registre 6 l'information qui sera utilisée ultérieurement par une autre instruction RAL (ou RTN) pour revenir à l'instruction suivant cette instruction RAL. Puis la liaison depuis le registre 10, au travers de l'unité d'incrémentation 15, vers le registre 4, est activée, provoquant l'incrémentation du nouveau contenu du registre 10 (qui est reçue depuis le registre 6) de +2 (en raison du fait que l'adressage d'instruction se trouve sur des limites de mot) et son emmagasinage dans le registre 4. Le registre 4 contient ainsi l'adresse de l'instruction qui suit l'instruction au point de retour précédemment établi.

Les registres D/I 27, 28 sont couplés au décodeur 29 par les circuits ET 40, 41 respectivement et le circuit OU 42. Une liaison 39 issue des unités de commande de cycles 31 est raccordée directement à une entrée du circuit ET 41 et une liaison 38 est raccordée à une entrée du circuit ET 40. Pendant une opération d'extraction d'instruction autre que les instructions RTN et RAL (lorsque le bit I est transféré du registre de liaison 6 au décodeur 29), une impulsion sur la ligne 39 transfère le bit I de la bascule 28 au décodeur 29 par l'intermédiaire du circuit ET 41 et du circuit OU 42. Pendant les opérations d'extraction de données, une impulsion sur la ligne 38 transfère le bit D de la bascule 27 ou décodeur 29 au moyen du circuit ET 40 et du circuit OU 42. Dans la réalisation préférée, le transfert des bits D/I au décodeur 29 se réalise pendant la période "Chargement Registre 10" représentée sur la 4ème ligne de la figure 2 — CHARGT REG. 10 —. Les bits D/I sont transférés au registre de retard 35 à l'instant "Registre 35 Activé" (figure 2—3ème ligne — REG. 35 ACT.) pendant l'exécution de chaque instruction. Ceci assure la disponibilité des valeurs D/I correctes (du programme ou du sous-programme courant) pour les instructions du type BAL. Puis, à l'instant "Chargement Registre 6" (figure 2 — avant dernière ligne — CHARGT REG 6) d'une instruction BAL, les bits D/I sont transférés du registre de retard 35 au registre de liaison 6.

Les instructions SDH et SDL se présentent sous le format 1111 11X0 0000 0001, format dans lequel le bit X est un "1" logique (niveau haut) ou un "0" logique (niveau bas). Les instructions SIH et SIL se présentent sous le format 1111 0100 1000 X001, format dans lequel le bit X est un "1" logique (niveau haut) ou un "0" logique (niveau bas). Comme on le voit sur la figure 2, les bits D/I sont placés tardivement dans le registre D/I 9, (2ème ligne — REG 9 ACT. —) dans le cycle d'exécution. Le transfert des bits D/I au registre de retard 35 se déroule avant le conditionnement du registre D/I 9 comme le montre la 3ème ligne de la figure 2 (REG. 35 ACT.).

Les lignes 4 à 8 de la figure montrent à quels moments dans les cycles d'exécution des instructions N, N + 1, N + 2, ..., se produisent les chargements des registres 10, 12, 11, 6 et 4 respectivement. La première ligne de cette figure montre les cycles d'extraction des instructions N + 1, N + 2, ....

Ce dispositif assure une liaison facile entre des programmes de calculateur, permettant ainsi pratiquement le déroulement simultané de deux programmes séparés. Cette facilité est assurée sans les inconvénients habituels (par exemple la complexité, le coût, l'effort de programmation, etc.) entraînés par un système d'interruption. De plus, ce dispositif assurera la liaison entre programmes d'une manière plus rapide que dans les dispositifs de l'art antérieur. Ce dernier point est particulièrement important dans une unité de command d'entrée/sortie de données qui peut devoir surveiller deux dispositifs en même temps et répondre très rapidement à l'un d'eux.

**Revendications**

1. Dispositif d'adressage de pages dans un système de traitement de données fonctionnant en mode d'extraction et d'exécution d'instructions en chevauchement, la mémoire du système
— contenant des instructions et des données d'un programme réparties en pages groupant un nombre prédéterminé de multiplets d'instructions et/ou de données et
— adressée par l'intermédiaire d'un registre d'adresse de mémoire (10) pouvant être chargé à partir du champ d'adresse d'une instruction contenue dans un registre d'instruction ou à partir du contenu d'un registre d'adresse de données ou enfin à partir d'un registre d'adresse d'instructions ou utilisant, une adresse de base pour les instructions et une adresse de base pour les données, les dense adresses de base pouvant être modifiées au cours de l'exécution d'un programme, ce dispositif d'adressage étant caractérisé en ce qu'il comporte:
a, un registre d'adressage de pages d'instructions (28) et un registre d'adressage de pages de données (27) connectés à la sortie du registre d'instruction (5) et pouvant être modifiés au cours de l'exécution d'un programme, contenant respectivement une adresse de page d'instructions et une adresse de page de données qui permettent l'adressage des instructions et des données d'un programme de façon que les données puissent se trouver dans la même page que les instructions ou dans une page différente;
b, des circuits de décodage d'adresse (29), connectés à la sortie du registre d'adresse de mémoire (10) et des registres d'adressage de pages (27—28), qui fournissent une adresse de page de mémoire aux circuits d'adressage de mémoire, à partir de l'information d'adressage fournie par l'un des deux registres d'adressage de page (27 ou 28) identifiant la page à adresser et éventuellement une partie de l'information

29 **0 006 485** 30

d'adresse fournie par le registre d'adresse de mémoire (10), l'adresse interne ou de déplacement à l'intérieur de la page identifiée par le registre d'adressage de page étant par ailleurs fournie par ce registre d'adresse de mémoire;

c, un dispositif de commande de cycles (31) qui, sous la commande d'une instruction N en cours d'exécution devant introduire une nouvelle information d'adressage de pages dans le registre d'adressage de pages d'instructions (28) ou dans le registre d'adressage de pages de données (27), charge le registre d'adresse de mémoire (10) et les circuits de décodage d'adresse (29) au début du cycle d'exécution de l'instruction N avant que la nouvelle information d'adressage de pages ne soit entrée dans le registre d'adressage de pages concerné (27 ou 28) de façon que l'instruction suivante du programme N + 1 soit adressée et extraite de la mémoire dans la même page que celle contenant l'instruction en cours d'exécution N, la nouvelle information d'adressage de page d'instructions indiquée par l'instruction N étant chargée dans le registre d'adressage de pages d'instruction (28) à la fin du cycle d'exécution de l'instruction N, cette nouvelle information d'adressage de page d'instructions étant utilisée au cours de l'exécution de l'instruction N + 1 pour adresser et extraire de la mémoire l'instruction N + 2 faisant suite à l'instruction N + 1.

2. Dispositif d'adressage de pages selon la revendication précédente pouvant effectuer des opérations de transfert de commande entre plusieurs programmes ou déroutement de programmes, caractérisé en ce qu'il comporte en outre:

un registre de retard (35) connecté entre les deux registres d'adressage de pages (27—28) et un registre de liaison (6), ce dernier registre pouvant emmagasiner une adresse de page d'instructions, une adresse de page de données et une adresse de déplacement délivrée par le registre d'adresse d'instruction (4),

le dispositif de commande de cycles (31) rendant actif le registre de retard (35) de telle sorte qu'au cours du cycle d'exécution d'une instruction N introduisant une nouvelle information d'adressage de pages, ce registre de retard reçoive le contenu des registres d'adressage de pages (27 et 28) avant que la nouvelle information d'adressage de pages n'y soit introduite, le registre de liaison (16) étant par ailleurs rendu actif au cours du cycle d'exécution de l'instruction suivante N + 1 pour emmagasiner l'information d'adressage de pages contenue dans le registre de retard et l'adresse de déplacement en provenance du registre d'adresse d'instruction permettant la reprise ultérieure de l'exécution du programme à partir du point où il a été dérouté.

3. Dispositif d'adressage de pages selon la revendication 2 caractérisé en ce que, au cours de l'exécution de l'instruction N + 1 fournissant une adresse de branchement, le dispositif de commande de cycles (31) rend actif les circuits de décodage d'adresse (29) de telle sorte qu'ils reçoivent la nouvelle information d'adressage de page contenue dans le registre d'adressage de page d'instructions, l'adresse de déplacement dans cette nouvelle page d'instructions, contenue dans le registre d'adresse de mémoire (10), étant fournie à partir du registre d'instruction (5) par le champ d'adresse de cette instruction N + 1, le contenu du registre de retard (35) et le contenu du registre d'adresse d'instruction (4) étant transférés au registre de liaison (6).

4. Dispositif selon la revendication 3 caractérisé en ce qu'il comporte en outre au moins un registre auxiliaire (11—12), le dispositif de commande de cycles (31), au cours de l'exécution d'une instruction N + 1 de branchement fournissant une adresse de branchement, chargeant dans ce registre auxiliaire (11 ou 12) l'information d'adressage de pages et l'adresse de déplacement en provenance du registre de liaison (6) ou d'un autre registre auxiliaire (11) et chargeant ensuite le registre de liaison (6) avec le contenu du registre de retard (35) et l'adresse de branchement fournie par le registre d'instruction (5), une opération inverse de transfert du contenu d'un registre auxiliaire vers le registre de liaison ou vers un autre registre auxiliaire étant commandée au cours de l'exécution d'une instruction de commande de retour au programme qui a initié l'opération de branchement.

5. Dispositif d'adressage de pages selon la revendication 3 ou 4 caractérisé en ce que, au cours de l'exécution d'une instruction commandant la reprise de l'exécution du programme à partir du point où il a été dérouté, le dispositif de commande de cycles (31) transfère l'information d'adressage de pages et l'adresse de déplacement contenue dans le registre de liaison (6) aux circuits de décodage d'adresse (29) et au registre d'adresse de mémoire (10) respectivement, une nouvelle information d'adressage de page et une nouvelle adresse de déplacement étant chargée dans le registre de liaison (6) à partir du registre de retard (35) et du registre d'adresse d'instruction (4) respectivement.

6. Dispositif selon l'une quelconque des revendications précédentes caractérisé en ce que les instructions sont des instructions de microprogrammes ou micro-instructions.

**Claims**

1. A page addressing mechanism in a data processing system operating in overlapped instruction fetch and execution mode, wherein the storage of the system contains the program instructions and data residing in pages that group a predetermined number of instruction and/or data bytes, and is addressed by means of a storage address register (10) that can be

16

loaded from the address field of an instruction contained in an instruction register, or from the contents of a data address register, or from an instruction address register, by using a base address for the instructions and a base address for the data, both base addresses being a modifyable during the execution of a program, said addressing mechanism being characterized in that it comprises:

a) an instruction page addressing register (28) and a data page addressing register (27) connected to the output of the instruction register (5) and modifiable during the execution of a program, said registers containing respectively an instruction page address and a data page address for addressing instructions and data of a program so that the data may reside in the same page as the instructions or in a different page;

b) address decoding circuits (29) connected to the output of the storage address register (10) and of the page addressing registers (27—28) and supplying a storage page address to the storage addressing circuits from the addressing information supplied by one of the two page addressing registers (27 or 28) identifying the page to be addressed and possibly part of the address information supplied by the storage address register (10), the internal or displacement address within the page identified by the page addressing register being supplied by said storage address register;

c) a cycle control device (31) that, under the control of an instruction N under execution, entering a new page addressing information into the instruction page addressing register (28) or into the data page addressing register (27), loads the storage address register (10) and the address decoding circuits (29) at the beginning of the execution cycle of instruction N before the new page addressing information is entered into the respective page addressing register (27 or 28) so that the following program instruction N + 1 is addressed and fetched from storage in the same page as that containing the instruction N being executed, the new instruction page addressing information indicated by instruction N being loaded into the instruction page addressing register (28) at the end of the execution cycle of instruction N, this new instruction page addressing information being used during execution of instruction N + 1 to address and fetch from storage instruction N + 2 that follows instruction N + 1.

2. A page addressing mechanism according to the preceding claim, for performing control transfer operations between several programs or program branch operations, characterized in that it further comprises:

a delay register (35) interconnecting the two page addressing registers (27—28) and a link register (6), the latter being able to store an instruction page address, a data page address, and a displacement address provided by the instruction address register (4),

the cycle control device (31) enabling the delay register (35) so that, during execution of an instruction N introducing a new page addressing information, said delay register receives the contents of the page addressing register (27 or 28) before the new page addressing information is introduced, said link register (16) being enabled during the execution cycle of the following instruction N + 1 to store the page addressing information contained in the delay register and the displacement address from the instruction address register for subsequently resuming program execution at the branch point.

3. A page addressing device according to claim 2, characterized in that, during execution of the instruction N + 1 providing a branch address, the cycle control device (31) enables the address decoding circuits (31) so that they receive the new page addressing information contained in the instruction page addressing register, the displacement address in this new instruction page, contained in the storage address register (10), being supplied from the instruction register (5) by the address field of said instruction N + 1, the contents of the delay register (35) and the instruction address register (4) being transferred to the link register (6).

4. A device according to claim 3, characterized in that it further includes at least one auxiliary register (11—12), the cycle control device (31) providing during the execution of a branch instruction N + 1 a branch address-loading into said auxiliary register (11 or 12) the page addressing information and the displacement address from the link register (6) or from another auxiliary register (11) and then loading into the link register (6) the contents of said delay register (6) and the branch address supplied by the instruction register (5), a reverse transfer operation of the contents from the auxiliary register to the link register or to another auxiliary register being initiated during execution of a return-to-program control instruction that has initiated the branch operation.

5. A page addressing device according to claim 3 or 4, characterized in that, during execution of an instruction to resume program execution at the branch point, the cycle control device (31) transfers the page addressing information and the displacement address contained in the link register (6) to the address decoding circuits (29) and to the storage address register (10) respectively, a new page addressing information and a new displacement address being loaded into said link register (6) from said delay register (35) and said instruction address register (4) respectively.

6. A device according to any one of the preceding claims, characterized in that the instructions are microprogram instructions or micro instructions.

## Patentansprüche

1. Seitenadressiervorrichtung in einem Datenverarbeitungssystem, das mit Überlappung von Instruktionsabruf- und -Ausführung arbeitet, wobei der Speicher des Systems

— Instruktionen und Daten eines Programmes enthält, die in Seiten aufgeteilt sind, die eine bestimmte Anzahl von Instruktions- und/oder Datenbytes zu Gruppen zusammenfassen, und

— von einem Speicheradressenregister (10) adressiert wird und geladen werden kann aus einem Adressenfeld einer in einem Instruktionsregister enthaltenen Instruktion, aus dem Inhalt eines Datenadressenregisters, oder aus einem Instruktionsadressenregister, indem eine Basisadresse für die Instruktionen und eine Basisadresse für die Daten benutzt wird, die beide während einer Programmausführung modifiziert werden können, wobei diese Adressiervorrichtung dadurch gekennzeichnet, ist, daß sie folgende Komponenten enthält:

a. ein Instruktionsseiten-Adressierregister, (28) und ein Datenseiten-Adressierregister (27), die an den Ausgang des Instruktionsregisters (5) angeschlossen sind und während einer Programmausführung modifiziert werden können und die eine Instruktionsseitenadresse bzw. eine Datenseitenadresse zur Adressierung der Instruktionen und der Daten eines Programms enthalten, so daß die Daten auf der gleichen oder auf einer anderen Seite wie die Instruktionen stehen können;

b. Adressendecodierer (29), die an den Ausgang des Speicheradressenregisters (10) und der Seitenadressierregister (27 und 28) angeschlossen sind, und die — aufgrund der Adressierinformation, geliefert von einem der beiden Seitenadressierregister (27 oder 28), welche die zu adressierende Seite und eventuell einen Teil der von dem Speicheradressenregister (10) gelieferten Adresseninformation identifizieren — an die Speicheradressierschaltungen eine Speicherseitenadresse liefern, wobei die interne oder relative Adresse auf der von dem Seitenadressierregister identifizierten Seite von diesem Speicheradressierregister geliefert wird;

c. eine Zyklensteuervorrichtung (31), die — gesteuert von einer in Ausführung befindlichen Instruktion N, die eine neue Seitenadressierinformation in das Instruktionsseiten-Adressierregister (28) oder in das Datenseiten-Adressierregister (27) einführt — das Speicheradressierregister (10) und die Adressendecodierer (29) ladet, und dies am Anfang des Ausführungszyklus der Instruktion N, vor Eingabe der neuen Seitenadressierinformation in das betreffende Seitenadressierregister (27 oder 28), so daß die folgende Programminstruktion N + 1 adressiert und aus dem Speicher geholt wird, auf derselben Seite, welche die in Ausführung befindliche Instruktion N enthält, wobei die neue, von der Instruktion N angegebene Instruktionsseiten-Adressierinformation in das Instruktionsseiten-Adressierregister (28) geladen, und diese neue Instruktionsseiten-Adressierinformation während der Ausführung der Instruktion N + 1 dazu benutzt wird, um den Speicher zu adressieren und daraus die auf die Instruktion N + 1 folgende Instruktion N + 2 zu holen.

2. Seitenadressiervorrichtung nach dem vorhergehenden Anspruch zum Ausführen der Steuerübertragungsoperationen zwischen den verschiedenen Programmen oder der Programmverzweigungsoperationen, dadurch gekennzeichnet, daß sie weiterhin enthält:

ein zwischen den beiden Seitenadressierregistern (27—28) angeschlossenes Verzögerungsregister (35) und ein Verbindungsregister (6), wobei letzteres eine Instruktionsseitenadresse, eine Datenseitenadresse und eine von dem Instruktionsadressenregister (4) gelieferte relative Adresse speichern kann, die Zyklensteuervorrichtung (31), welche das Verzögerungsregister (35) so aktiviert, daß dieses Verzögerungsregister während der Ausführungsphase einer Instruktion N, die eine neue Seitenadressierinformation einführt, den Inhalt der Seitenadressierregister (27 und 28) erhält bevor diese Seitenadressierinformation auftritt, wobei das Verbindungsregister (16) während der Ausführungsphase der folgenden Instruktion N + 1 aktiviert wird zum Speichern der in dem Verzögerungsregister enthaltenen Seitenadressierinformation und der relativen Adresse aus dem Instruktionsadressenregister, das die Wiederaufnahme der Programmausführung vom Verzweigungspunkt an ermöglicht.

3. Seitenadressiervorrichtung nach Anspruch 2, dadurch gekennzeichnet, daß während der Ausführung der eine Verzweigungsadresse liefernden Instruktion N + 1, die Zyklensteuervorrichtung (31) die Adressendecodierer (29) so aktiviert, daß sie die neue in dem Instruktionsseitenadressierregister enthaltene Seitenadressierinstruktion empfangen, wobei die in dem Speicheradressenregister (10) enthaltene relative Adresse auf dieser neuen Instruktionsseite von dem Instruktionsregister (5) mit dem Adressenfeld dieser Instruktion N + geliefert und der Inhalt des Verzögerungssystems (35) sowie des Instruktionsadressenregisters (4) zum Verbindungsregister (6) übertragen wird.

4. Vorrichtung nach Anspruch 3, dadurch gekennzeichnet, daß sie weiterhin wenigstens ein Hilfsregister (11—12) einschließt, wobei die Zyklensteuervorrichtung (31) während der Ausführung einer eine Verzweigungsadresse liefernde Verzweigungsinstruktion in dieses Hilfsregister (11 oder 12) die Seitenadressierinformation und die vom Verzögerungsregister (6) oder einem anderen Hilfsregister (11) stammende relative Adresse ladet, und dann in das Verbindungsregister (6) den Inhalt des Verzögerungsregisters (35) und die von dem Instruktionsregister (5) gelieferte Verzweigungs-

adresse, und wobei eine umgekehrte Operation den Inhalt eines Hilfsregisters in das Verbindungsregister oder in ein anderes Hilfsregister überträgt, und zwar bei der Ausführung einer Programmrückkehr-Steuerinstruktion, die die Verzweigungsoperation ausgelöst hat.

5. Seitenadressiervorrichtung nach Anspruch 3 oder 4, dadurch gekennzeichnet, daß — bei der Ausführung einer die Wiederaufnahme des Programms ab dem Verzweigungspunkt steuernde Instruktion — die Zyklensteuervorrichtung (31) die Seitenadressierinformation und die im Verbindungsregister (6) enthaltende relative Adresse an die Adressendecodierer (29) bzw. an das Speicheradressenregister (10) weiterleitet, wobei eine neue Seitenadresseninformation und eine neue relative Adresse aus dem Verzögerungsregister (35) bzw. dem Instruktionsadressenregister (4) in das Verbindungsregister (6) geladen wird.

6. Vorrichtung nach einem der vorhergehenden Ansprüche, dadurch gekennzeichnet, daß es sich bei den Instruktionen um Mikroprogramm- oder Mikroinstruktionen handelt.

FIG. 1

0 006 485

1

FIG. 2